Europäisches Patentamt

(19) European Patent Office

Office européen des brevets

(11) Publication number: **0 214 373**
**A1**

# EUROPEAN PATENT APPLICATION

(21) Application number: 86107830.1

(22) Date of filing: 09.06.86

(51) Int. Cl.⁴: **F 16 D 55/224**

(30) Priority: 26.08.85 US 769104

(43) Date of publication of application:
18.03.87 Bulletin 87/12

(84) Designated Contracting States:
DE FR GB IT

(71) Applicant: ALLIED CORPORATION
Columbia Road and Park Avenue P.O. Box 2245R (Law Dept.)
Morristown New Jersey 07960(US)

(72) Inventor: Gumkowski, Bert Alex ALLIED CORPORATION
Law Department 401 Bendix Drive P.O. Box 4001
South Bend Indiana 46634(US)

(74) Representative: Brullé, Jean et al,
Service Brevets Bendix 44, rue François 1er
F-75008 Paris(FR)

(54) Disc brake parking actuator having multi-directional adjustability.

㉗ A disc brake (10) includes both a hydraulic service actuator (30) and a mechanical parking or emergency actuator (50). The brake includes a caliper (24) having therewithin a stepped bore (32) and coaxial members (58, 60) mounted, along with the hydraulic piston (40), in the larger diameter portion (34) of the bore (32). A lever (52) of the mechanical parking or emergency actuator (50) is disposed exteriorily of the caliper housing (24) and is rotatably fixed to a lever member (70) which extends through an opening (80) in an end wall (90) of the caliper housing (24). The caliper member (24) has a plurality of recesses (72) disposed oppositely from a plurality of recesses (59) in a coaxial member (58, 60), with force-transmitting elements (74) in the shape of balls (74) disposed therebetween. The lever (52), lever arm member (70), coaxial members (58, 60), and force-transmitting elements (74) provide a ball ramp actuator (50). Disposed about the opening (80) in the end wall (90) of the caliper housing (24), is a bearing ring (101) having an angled or curved surface (102) slidingly engaging a complementary-shaped curved or angled surface (92) disposed about the opening (80) in the end wall (90). A plurality of roller bearings (77) are disposed between the ring (101) and lever member (70). The ring (101) may move multi-directionally on the curved surface (92) of the end wall (90) and thereby permit the lever member (70) to move multi-directionally as the lever (52) is rotated to actuate the mechanical parking actuator (50). The multi-directional ring (101) permits the force-transmitting elements (74) to seat substan-

tially simultaneously during rotation of the lever (52) and enables an improved operation of the mechanical parking actuator (50).

FIG. I

DISC BRAKE PARKING ACTUATOR HAVING

MULTI-DIRECTIONAL ADJUSTABILITY

This invention relates to a mechanical parking actuator for a disc brake.

The advantages of disc brakes have been well-known to automotive engineers for a number of years. However, disc brakes have been used primarily on the front wheels of an automotive vehicle, with more conventional drum brakes still being used generally on the rear wheels. It is desirable to use disc brakes on all four wheels because the disc-front/drum-rear arrangement requires extensive proportioning and metering valves, in addition to perpetuating inherent disadvantages of the drum brakes on the rear wheels. Disc brakes have not been used on the rear wheels of the vehicle because automobiles must be provided with a mechanical actuator for emergency and parking use, and heretofore parking actuators for disc brakes have been relatively complicated and expensive. Burnett et al. U.S. Patent 3,701,400 issued October 31, 1972 and owned by the same assignee as herein, illustrates a prior parking actuator for a disc brake that has a ball ramp parking actuator mechanism. Gambardella U. S. Patent No. 3,805,924 issued April 23, 1974, and owned by the same assignee as herein, illustrates a rear disc brake with an integral ball ramp parking mechanism operated by an exteriorily disposed actuating lever. The parking mechanism includes a bearing race and wedge disposed between shoulders of the mechanism and housing, with the wedge and parking mechanism being positionally fixed along a transverse axis and non-adjustable. As each of these ball ramp parking actuators are operated, the balls move along the respective recesses and may experience unequal loading on the ball as a result of manufacturing tolerances which may not allow the balls to seat simultaneously as they are displaced. In other words, the ball ramp parking actuators of the above-cited patents do not provide for any adjustable movement of the lever and attached lever member in order to compensate for manufacturing tolerances that may cause the balls to seat at different points during rotation of the lever. This can result in unequal loading on the balls and stresses exerted upon less than all of the balls, with the lever arm being more difficult to rotate and resulting deterioration and wear of the components occurring. Therefore, it is desirable to provide a ball ramp parking actuator which is multi-directionally adjustable in order to permit the balls to seat substantially simultaneously during operation of the actuator.

The present invention comprises a disc brake having a torque member, a rotor with a pair of opposed friction faces, a pair of friction elements each being disposed adjacent the friction faces, a caliper housing slidably mounted on the torque member and operably connected to each of the friction elements, the caliper housing defining a bore having a piston slidably received therewithin for movement toward and away from the rotor to urge the friction elements into braking engagement with the corresponding friction faces when pressurized fluid is admitted into the bore, and a lever rotatable about an axis generally parallel to the axis of the rotor and from a brake release position to a brake actuated position, the lever attached to a. lever member which extends into and through a caliper housing opening and into the bore, an extendable member disposed between the piston and the lever member, force-transmitting elements disposed between the extendible member and the lever member for urging the extendible member and piston toward the rotor when the lever is rotated toward the actuated position, and multi-directional bearing means disposed between the lever member and the housing end wall, the multi-directional bearing means having a radially outer angled face engaging a complementary-shaped angled face of the end wall disposed about said opening, the opening having a diameter slightly larger than the diameter of the lever member so that as said lever is rotated the lever member may move multi-directionally as the angled faces slidingly engage in order to permit the force-transmitting elements to seat substantially simultaneously between the lever member and the extendible member.

Figure 1 is a longitudinal cross-sectional view of a disc brake in accordance with the present invention, and

Figure 2 is an isometric view of the multi-directional bearing means of the present invention.

Referring to the drawings, a disc brake generally designated by reference numeral 10 includes a rotor 12 mounted for rotation with the member to be braked, and which has a pair of friction faces 14 and 16. Friction elements 18, 20 are disposed adjacent friction faces 14, 16 and are adapted to frictionally engage the latter when a brake application is effected. A torque member 22 is mounted on a non-rotating portion of the vehicle adjacent friction face 14, and slidably supports the caliper generally indicated by reference numeral 24 for movement parallel to the axis of rotation of the rotor 12. The caliper 24 may be mounted to the torque member 22 in any suitable manner well known to those skilled in the art. Caliper 24 comprises bridge portion 26 extending across the periphery of rotor 12, an inwardly extending portion 28 which extends generally parallel to the friction face 16 and engages friction element 20, and a fluid motor portion generally indicated by reference numeral 30 disposed adjacent friction element 18 and extending parallel to the friction face 14. Fluid motor portion 30 defines a stepped bore 32 which includes a larger diameter portion 34 and a smaller diameter portion 36 with an axially extending shoulder 38 therebetween. A piston 40 is slidably mounted in the larger section 34 of bore 32, and the seal 42 carried in bore 32 not only seals the piston against the wall of the bore but provides a retraction force on the piston when the brakes of the vehicle are released, as more completely described in U. S. Patent No. 3,377,076. A conventional boot 44 extends between the caliper 24 and the piston 40 to prevent contaminants from entering the bore 32. An inlet port 46 is connected with an outlet port of the vehicle's master cylinder (not shown) so that when the master cylinder is actuated, braking pressure is communicated into bore 32 for operating piston 40 to effect a braking application.

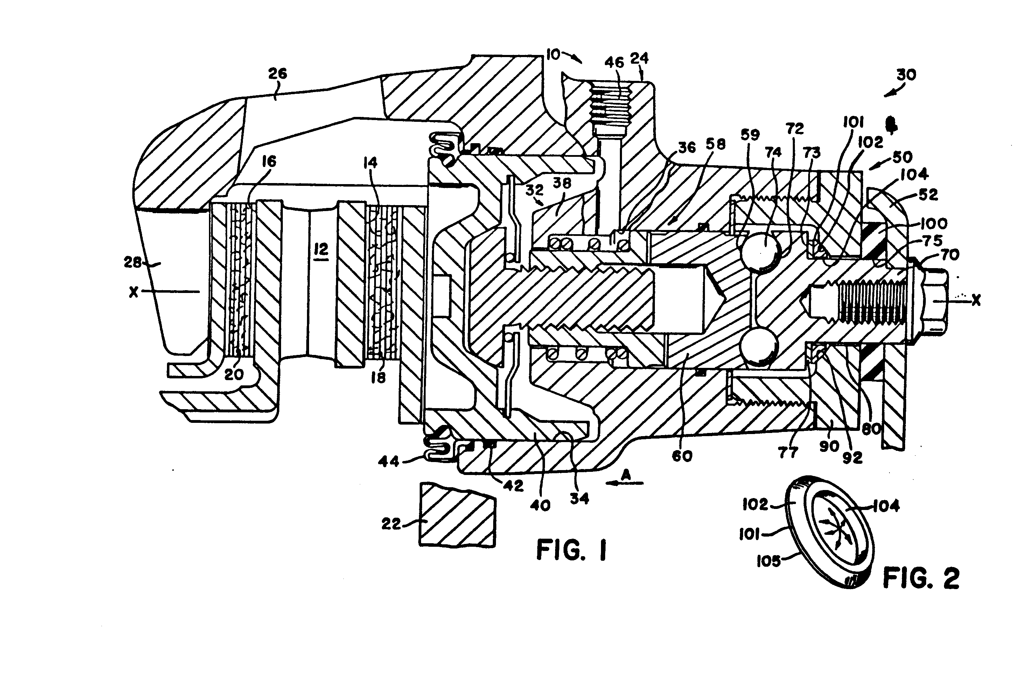

A mechanical actuator generally designated by reference numeral 50 includes an adjuster assembly 58 accommodating for lining wear to maintain a predetermined running clearance between a rotor and a friction element (as is well know in the art), and a second piston 60 cooperating with a lever member 70 which extends through opening 80 in plug or cover 90 of caliper 24. The mechanical actuator 50 includes a lever 52 rotationally fixed to lever member 70 which extends through plug opening 80 and into bore 36. Lever member 70 includes a plurality of ramp recesses 72 receiving therein balls 74 which are also received within recesses 59 of adjuster assembly 58. While only a pair of recesses 72 and balls 74 are illustrated in the drawing Figure 1, it should be noted that any number of balls 74 and ramp recesses 72 may be provided between the lever member 70 and piston 60, as is well known in the art and more clearly illustrated in U. S. Patents Nos. 3,701,400 and 3,805,924, owned by the assignee of the present invention and incorporated herein by reference. It should be clearly understood that the adjuster assembly 58 may comprise any of several designs for such adjuster assemblies that operate in conjunction with a ball ramp camming device.

Disposed about lever member 70 is a seal 100 which prevents contaminants from entering into bore 36 through opening 80. The plug 90 includes a curved surface 92 disposed circumferentially about opening 80, the curved surface having a slight concavity in order to mate with a correspondingly shaped, slightly convex surface 102 of multi-directional bearing member 101. Multi-directional bearing member 101 is shaped essentially like a ring (see Figure 2) and includes a slightly convex outer surface 102 disposed radially outwardly of a radially inward perimeter 104 which fits about the reduced diameter 75 of member 70. Disposed between the multi-directional bearing member 101 and shoulder 73 of member 70, are bearing races or roller bearings 77 which engage the flat axial surface 105 of ring 101. The diameter of opening 80 is slightly greater than the diameter of reduced diameter 75, thereby permitting lever member 70 to move in the opening 80.

During a parking brake application, the lever 52 is rotated about axis x-x which causes lever member 70 to rotate therewith and effect actuation of actuator 50. Rotation of lever member 70 causes balls 74 to advance along ramp recesses 72 which displaces axially balls 74 against recesses 59 and causing the adjuster assembly 58 to extend axially in the direction of arrow A so that piston 40 engages friction element 18. The engagement of friction element 18 with friction face 14 of rotor 12 causes the caliper 24 to move axially opposite the direction of arrow A and cause element 20 to engage friction face 16 and thereby rotationally fix rotor 12 between friction elements 18 and 20. Because of a buildup of manufacturing tolerances which may provide high and low areas in the recesses 72 and 59, as lever member 70 is rotated the balls are moved and may not engage and seat simultaneously in their respective recesses. In other words, there may result an unequal seating of the balls in their respective recesses and therefore an unequal load on the balls, with the result that stress may be exerted simultaneously on fewer than all three of the balls and thereby cause deterioration of the components of the actuator 50 which makes the rotation of the lever member 70 more difficult. In order to provide for simultaneous seating of the balls within their respective recesses, lever member 70 is rendered multi-directionally movable by means of the multi-directional bearing member 101 whose face 102 slidingly engages the complementary-shaped surface 92 of plug 90. Thus, as multi-directional bearing member 101 moves multi-directionally (in accordance with the Arrows of Figure 2), lever member 70 is free to move therewith and the balls seat substantially simultaneously in their respective recesses.

It is an important aspect of the present invention that the gap between the diameter of opening 80 and reduced diameter section 75 be maintained in order to permit the lever member 70 to move multi-directionally as is needed. It should be clearly understood that the bearing races or roller bearings 77 may comprise any of several known bearing means which provide improved rotational movement of the lever member 70 relative to the plug 90, and that the multi-directional bearing member 101 should be free to move or rotate multi-directionally as illustrated in Figure 2 in order to permit the ball ramp mechanism to operate efficiently and trouble free.

While a detailed description of the preferred embodiments has been disclosed, it will be obvious to those skilled in the art that various modifications and changes may be made thereto without departing from the scope and spirit of the invention as hereinafter defined in the appended claims.

## CLAIMS

1. A multi-directional, self-seating mechanical actuator (50) for a disc brake (10) wherein the caliper assembly (24) cooperates with at least one friction pad (18) to engage the friction pad (18) with a rotor (12), the caliper assembly (24) including a housing (30) and a bore (32) receiving the piston assembly (40) which is movable in the bore (32) to engage the friction pad (18) with the rotor (12), and a mechanical actuator (50) disposed in the bore (32) for moving said piston assembly (40), characterized in that the mechanical actuator (50) comprises a lever arm (52, 70) rotatable about an axis generally parallel to the axis of said rotor (12) and extending into the bore (32), force transmitting elements (74) disposed between the lever arm (52, 70) and the piston assembly (40), an end wall (90) of the caliper housing (30) having an opening (80) through which extends said lever arm (52, 70), and multi-directional bearing means (101) disposed between said end wall (90) and said lever arm (52, 70) in order to provide for multi-directional movement of said lever arm (52, 70), so that as said lever arm (52, 70) is rotated about the parallel axis, the force transmitting elements (74) may seat substantially simultaneously between said lever arm (52, 70) and piston assembly (40).

2. The multi-directional, self-seating mechanical actuator in accordance with claim 1, characterized in that said multi-directional bearing means comprises a ring (101) having a curved outer surface (102) slidingly engaging a curved housing surface (92) disposed about said opening, to permit multi-directional movement of said ring (101) and lever arm (52, 70) relative to said caliper housing (30).

3. The multi-directional, self-seating mechanical actuator in accordance with claim 2, characterized in that said mechanical actuator (50) further comprises a plurality of roller bearings (77) disposed between said lever arm (52, 70) and said ring (101), in order to facilitate said rotational movement of the lever arm (52, 70).

4. The multi-directional, self-seating mechanical actuator in accordance with claim 3, characterized in that said force-transmitting elements (74) comprise spherically shaped elements (74) received within complementary disposed recesses (59, 72) between said lever arm (52, 70) and piston assembly (40), the recesses (59, 72) including ramps (72) so that rotation of said lever arm (52, 70) effects axial displacement of said spherical elements (74).

5. The multi-directional, self-seating mechanical actuator in accordance with claim 1, characterized in that the actuator comprising sealing means (100) disposed between said lever arm (52, 70) and an outer surface of said end wall (90) of the caliper housing (30), said sealing means (100) preventing contaminants from entering into said opening (80).

6. The multi-directional, self-seating mechanical actuator in accordance with claim 1, characterized in that said opening (80) in said end wall (90) of said housing (30) has a diameter slightly greater than the diameter of said lever arm (52, 70) extending therethrough, in order that said lever arm (52, 70) may move multi-directionally as said force-transmitting elements (74) are displaced during rotation of said lever arm (52, 70).

FIG. 1

FIG. 2

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A,D | US-A-3 805 924 (GAMBARDELLA) * Column 2, line 27 - column 3, line 45; figure 1 * | 1,3-5 | F 16 D 55/224 |
| A | US-A-4 006 802 (EVANS) * Column 4, line 4 - column 5, line 36; figure 1 * | 1,3-5 | |
| A | GB-A- 717 850 (AUTOMOTIVE PRODUCTS CO. LTD.) * Page 3, lines 88-120; page 4, lines 121-127; figures 7,8,14,15 * | 1,2,6 | |
| A | US-A-3 442 357 (FARR) | | |
| A | FR-A-2 219 336 (GIRLING LTD.) | | TECHNICAL FIELDS SEARCHED (Int. Cl 4) |
| A | GB-A-2 074 261 (ALFRED TEVES GmbH) | | F 16 D 55/00 F 16 D 65/00 |

-----

The present search report has been drawn up for all claims

| Place of search THE HAGUE | Date of completion of the search 02-12-1986 | Examiner BRAEMS C. |
|---|---|---|